# FASCICULE DE BREVET EUROPEEN

(11) **EP 3 041 364 B1**
(45) Date de publication et mention de la délivrance du brevet: **07.10.2020**
(21) Numéro de dépôt: 14786999.4
(22) Date de dépôt: 02.09.2014
(51) Int. Cl.: A23G 4/10

(54) **UTILISATION D'UN AGENT ANTI MOTTANT POUR AMELIORER LA DURETE DE CHEWING-GUM CONTENANT DU MALTITOL SOUS FORME PULVERULENTE**
VERWENDUNG EINES ANTIAGGLUTINIERUNGSMITTELS ZUR VERBESSERUNG DER HÄRTE VON KAUGUMMI MIT MALTITOL IN PULVERFORM
USE OF AN ANTI-CAKING AGENT FOR IMPROVING THE HARDNESS OF CHEWING-GUM CONTAINING MALTITOL IN A POWDERY FORM

(30) Priorité: 02.09.2013 FR 1358381
(43) Date de publication de la demande: 13.07.2016
(73) Titulaire: Roquette Frères, 62136 Lestrem (FR)
(72) Inventeur: ORTIZ DE ZARATE, Dominique, F-59660 Merville (FR); LIS, José, F-59253 La Gorgue (FR); RIBADEAU-DUMAS, Guillaume, Décédé (FR)
(74) Mandataire: Plasseraud IP
(86) Numéro de dépôt international: PCT/FR2014/052160
(87) Numéro de publication internationale: WO 2015/028763

(56) Documents cités:
- EP-A1- 0 664 960
- WO-A1-01/95738
- FR-A1- 2 929 512
- US-A- 4 976 972
- US-A1- 2005 008 747
- US-A1- 2007 184 149
- US-A1- 2007 196 534
- US-B1- 6 416 744
- DEGUSSA: "Product informations: AEROSIL 200 PHARMA - COLLOIDAL SILICON DIOXIDE", INTERNET CITATION, 2006, XP002420775, Retrieved from the Internet: URL:http://www.degussa.com/degussa/en/prod ucts/ [retrieved on 2007-02-15]

## Description

La présente invention se rapporte à l'utilisation d'un agent anti-mottant ayant la fonction particulière d'augmenter la dureté d'une composition de chewing-gum, une telle augmentation étant souhaitable par exemple pour éviter la déformation de centres à dragéifier dans les turbines de dragéification ou pour améliorer les cadences d'emballage de sticks. L'agent anti-mottant est soit introduit comme additif direct dans le chewing-gum au même titre que la composition pulvérulente de maltitol, soit mélangé au préalable avec cette composition pulvérulente de maltitol.

Dans toute la présente Demande, l'expression « maltitol sous forme de poudre » ou « composition pulvérulente de maltitol » désigne une composition contenant du maltitol, caractérisée en ce qu'elle présente une teneur en matière sèche égale à au moins 97 %, préférentiellement au moins 98 %, très préférentiellement au moins 98,5 % de son poids total (caractère pulvérulent), ladite matière sèche étant représentée à plus de 85 %, préférentiellement à plus de 90 %, très préférentiellement à plus de 91 % en poids de maltitol (composition de maltitol).

Les compositions de chewing-gum actuelles, formulées avec ou sans sucre, de type bubble-gum ou non, éventuellement dragéifiées, contiennent au moins une gomme de base non hydrosoluble, au moins un agent sucrant sous forme de poudre ou de liquide, et au moins un arôme. Elles peuvent aussi contenir de manière non exhaustive des colorants, des émulsifiants, des plastifiants, des édulcorants intenses, des lubrifiants alimentaires, des principes pharmaceutiques, de l'eau, ...

Lorsqu'elles sont réalisées sans sucre, les compositions de chewing-gum contiennent pour la plupart du maltitol en tant qu'agent sucrant. Le maltitol est un polyol obtenu industriellement par hydrogénation du maltose. Il présente un grand intérêt en raison du fait qu'il est plus stable chimiquement, moins calorique et qu'il présente un index glycémique plus bas que le saccharose, tout en possédant avantageusement des propriétés organoleptiques très voisines de celles de ce sucre. De plus, le maltitol possède la particularité de n'être pas cariogène.

Pendant de longues années, il a été mis en œuvre sous forme de sirops, comme décrit pour la première fois dans le document US 4 408 041. En effet, le maltitol sous forme de poudre est sensible au phénomène de mottage, qui engendre nombre de problèmes : non seulement par les sérieuses difficultés de manipulation qui en découlent (transfert et déballage, broyage et remise en solution...), mais aussi en impactant fortement le rendement de ces opérations.

Ce n'est que grâce à la solution proposée par la Demanderesse dans le document FR 2 929 512 qu'on est parvenu à limiter et même à annihiler ces inconvénients. Cette solution repose sur la mise en œuvre, en combinaison de la poudre de maltitol, d'un agent anti mottant très peu soluble dans l'eau, présentant une excellente aptitude à absorber de l'eau, et de préférence avec une fine granulométrie. Cet agent est notamment choisi parmi la silice pyrogénée, le silicate aluminosodique, le tri-calcium phosphate anhydre, la fécule de pomme de terre déshydratée et leurs mélanges.

EP 0 664 960 A1 divulgue une composition de chewing-gum comportant une gomme de base (de préférence, la teneur en gomme de base de la composition est comprise entre 15 % et 40 %), un arôme et du maltitol pulvérulent (2 à environ 85 % de la composition). La composition comporte aussi des agents de charge comme du talc, le carbonate de calcium. Ce document s'intéresse aux problèmes de persistance du goût et de texture agréable.

Classiquement, et comme indiqué par exemple dans le document « Chewing gum sans sucre à base de maltitol » (Maruyama T., Terasawa M., Takiguchi T., Shokuhin Kôgyô, 1984, 27, n° 24, pp. 73-80*)* la composition de chewing-gum est réalisée par mélange à chaud des différents constituants dans un pétrin à bras en Z avec une double enveloppe maintenue en général entre 45°C et 80°C. Le produit est ensuite mis en forme par extrusion, laminage, découpe, refroidissement puis conditionné, transporté sur son lieu de vente, en attente d'être consommé. Il peut donc s'écouler plusieurs jours, voire plusieurs semaines, entre le moment de sa fabrication et sa date de consommation. Or, il est une caractéristique importante de cette composition qui doit être maintenue la plus élevée possible durant toute la période de stockage mais aussi durant le procédé de fabrication (pour éviter les déformations dans les turbines de dragéification ou pour optimiser les cadences d'emballage de sticks) : c'est sa dureté.

La dureté est une caractéristique mécanique bien connue de l'homme du métier, qui peut être facilement appréhendée à travers un test du même nom, mettant en œuvre un dispositif appelé pénétromètre ou texturomètre. Le principe de l'expérience consiste à mesurer la résistance qu'oppose une face d'un échantillon à la pénétration d'un corps plus dur, comme une pointe ou une bille.

Dans le cas d'un chewing-gum, cette dureté est directement reliée à des caractéristiques sensorielles ressenties au cours de la consommation : il s'agit de la dureté à la première mâche et de la tenue en bouche. Une dureté excessive à la première mâche est désagréable. Une bonne tenue en bouche s'oppose notamment à la sensation ressentie en présence d'une pâte trop molle.

De manière générale, on cherchera à augmenter la dureté des chewing-gums si on souhaite utiliser une gomme de base donnant une mâche très souple / molle, si on veut introduire beaucoup d'arôme liquide dans le chewing-gum, ou encore si on cherche à introduire une quantité importante de phase liquide (par exemple de la glycérine ou du sirop de maltitol Lycasin® 85/55 ou Lycasin® 80/55 commercialisé par la Demanderesse) afin de réduire le coût de fabrication.

Un moyen bien connu de l'homme du métier pour ajuster la dureté de la composition de chewing-gum, est de jouer sur la quantité de glycérine qu'elle contient et/ou sur le ratio entre agent sucrant introduit sous forme liquide et sous forme de poudre ; ceci est notamment rapporté dans le document WO 2011/109376. Or, ces techniques engendrent par nature des modifications importantes dans la recette de la composition, au niveau des quantités de produits engagés : de telles modifications ne sont pas forcément souhaitées par le formulateur.

Par conséquent, il existe un besoin important de disposer d'un procédé de fabrication d'une composition de chewing-gum contenant du maltitol sous forme de poudre, à la fois simple à mettre en œuvre, sans engendrer de modifications importantes au niveau des quantités de produits engagées, et conduisant au final à un produit à la dureté sensiblement améliorée et conservée dans le temps. Travaillant dans ce sens, la Demanderesse est parvenue à mettre au point un tel procédé. Celui-ci repose notamment sur l'introduction d'un agent anti-mottant dans la composition de chewing-gum, ledit agent étant introduit comme additif direct dans la composition de chewing-gum (c'est-à-dire mélangé avec les autres ingrédients) ou étant introduit en combinaison avec la composition pulvérulente de maltitol (c'est-à-dire mélangé préalablement avec le maltitol sous forme de poudre).

Aussi, un premier objet de l'invention consiste en l'utilisation d'un agent anti-mottant dans une composition de chewing gum contenant du maltitol sous forme de poudre, comme agent améliorant, pour augmenter la dureté de cette composition de chewing gum.

Le terme « anti-mottant » désigne l'aptitude d'un composé à éviter / réduire les problèmes de mottage d'une poudre, c'est-à-dire le phénomène d'agglomération des particules individuelles composant ladite poudre, un tel phénomène étant notamment lié à la présence d'humidité.

De manière tout à fait inattendue, la mise en œuvre de l'agent anti-mottant conduit à un chewing gum dont la dureté est largement augmentée par rapport à celle d'un produit issu du même procédé mais sans mise en œuvre d'anti-mottant. On vérifie d'une part que cette dureté est renforcée au cours du procédé de fabrication du chewing-gum en mesurant les duretés à 45 °C, 35 °C et 20 °C au moment de la fabrication, et d'autre part que ce niveau de dureté est conservé sur une période de stockage à 50 % d'humidité relative et 20°C pouvant atteindre 15 jours.

L'agent anti-mottant utile à la présente invention présente une surface spécifique BET d'au moins 200 m²/g.

L'agent anti-mottant est une silice micronisée d'une surface spécifique BET d'au moins 200 m²/g.

Les exemples illustrant la présente demande de brevet démontrent tout l'intérêt de disposer d'un agent anti-mottant de surface spécifique BET élevée. Dans toute la suite de la demande, on pourra utiliser l'expression « composé présentant une surface spécifique BET élevée » en lieu et place de « composé présentant une surface spécifique BET d'au moins 200 m²/g ».

Dans cette utilisation, la composition de chewing-gum contient, les pourcentages étant indiqués en poids sec par rapport au poids total de ladite composition de chewing-gum, de :
- de 4,5 % à 95 %, de préférence de 5 % à 95 %, et plus préférentiellement 20 % à 50 % d'au moins une gomme de base,
- 1 % à 95 %, préférentiellement 10 % à 60 % d'une composition pulvérulente de maltitol,
- 0,1 % à 10 %, préférentiellement 0,1 % à 3 % d'au moins un arôme,
- Et de 0,1 % à 20 %, préférentiellement 0,1 % à 5 %, en poids sec d'au moins un agent anti-mottant par rapport au poids sec de maltitol.

La gomme de base utilisée pourra être adaptée au type de chewing-gum fabriqué. Elle pourra comprendre des élastomères synthétiques et/ou naturels comme le polyisoprène, l'acétate de polyvinyle, le polyisobutylène, des latex, des résines comme les résines terpéniques, les esters et les alcools de polyvinyle, des matières grasses ou des cires comme par exemple la lanoline, les huiles végétales partiellement hydrogénées ou non, les acides gras, les esters partiels de glycérol, la paraffine, les cires microcristallines.

Le maltitol utilisé dans la composition pulvérulente précitée présente préférentiellement une surface spécifique BET comprise entre 0,1 m²/g et 10 m²/g.

Dans le cadre de cette utilisation, la composition de chewing gum peut aussi contenir, à raison d'au plus 5 % en poids par rapport au poids total de ladite composition de chewing-gum, au moins un constituant choisi parmi les colorants, les édulcorants intenses tels qu'aspartame, acésulfame K, alitame, néotame, sucralose, saccharine, néohespéridine DC, stiéviosides, brazzéine, les actifs pharmaceutiques, minéraux, extraits de plantes, antioxydants, et fibres indigestibles telles que par exemple les oligosaccharides tels que les fructo oligosaccharides, les fibres indigestibles telles que le Fibersol™ commercialisé par la société MATSUTANI, ou encore le NUTRIOSE™ FB commercialisé par la Demanderesse, des émulsifiants comme la lécithine, etc.

Dans une première variante, l'agent anti-mottant est introduit directement dans la composition de chewing gum, en mélange avec les 3 composés précités (la gomme de base, l'arôme et la composition pulvérulente de maltitol) et éventuellement avec d'autres composés explicités ci-dessus.

Dans une seconde variante, l'agent anti-mottant est introduit par mélange préalable avec la composition pulvérulente de maltitol, avant d'être mélangé avec la gomme de base, l'arôme et éventuellement d'autres composés explicités plus loin. Dans ce cas, le mélange préalable agent anti-mottant / maltitol pulvérulent est réalisé à partir de tous les procédés de mélange de poudres (notamment en mode batch ou continu) bien connus de l'homme du métier. A titre de mélangeurs batch utilisables, on pourra notamment citer les mélangeurs commercialisés par les sociétés Turbula, Lodige, Forberg, Gericke ; en ce qui concerne les mélangeurs en continu, on pourra citer les dispositifs commercialisés par les sociétés Lodige, Forberg, Gericke.

La composition de chewing-gum est donc celle résultant du mélange des composés précités, ledit mélange subissant par la suite des opérations d'extrusion, laminage, découpe, refroidissement puis conditionnement qui conduisent au chewing-gum final. Cette étape de mélange est bien évidemment distincte de l'étape de mélange entre l'agent anti-mottant et la composition pulvérulente de maltitol, selon la deuxième variante du procédé de l'invention où l'agent anti-mottant n'est pas utilisé comme additif direct, mais vectorisé à travers le maltitol pulvérulent au sein de la composition de chewing-gum.

La composition de chewing gum est donc obtenue à partir d'au moins une étape de mélange entre les composés précités :
- la gomme, la composition pulvérulente de maltitol, l'arôme et l'agent anti-mottant dans une première variante,
- la gomme, la composition pulvérulente préalablement additivée de l'agent anti-mottant et l'arôme selon une seconde variante.

On va désormais décliner les caractéristiques de cette étape de mélange (qui, comme déjà indiqué, est distincte de l'étape de mélange entre l'agent anti-mottant et le maltitol pulvérulent). La Demanderesse recommande d'effectuer ce mélange à une température comprise entre 45°C et 80°C, préférentiellement dans un pétrin à bras en Z avec une double enveloppe. De manière préférée, il convient de chauffer au préalable la gomme de base, à une température comprise entre 45°C et 80°C, de préférence entre 45°C et 55°C, par tout moyen connu de l'homme du métier. On pourra à titre d'exemple la chauffer dans un four à micro-ondes ou dans une étuve.

Le mélange entre les composés précités peut en outre mettre en œuvre un autre polyol en tant qu'agent sucrant, sous forme de poudre ou de liquide, tel que par exemple le mannitol, le sorbitol, le xylitol, l'érythritol, le lactitol, l'isomalt, les sirops de glucose hydrogénés. Ledit polyol est alors présent à raison d'au plus 20 % en poids, par rapport au poids total du chewing-gum réalisé.

La gomme de base utilisée pourra être adaptée au type de chewing-gum fabriqué. Elle pourra comprendre des élastomères synthétiques et/ou naturels comme le polyisoprène, l'acétate de polyvinyle, le polyisobutylène, des latex, des résines comme les résines terpéniques, les esters et les alcools de polyvinyle, des matières grasses ou des cires comme par exemple la lanoline, les huiles végétales partiellement hydrogénées ou non, les acides gras, les esters partiels de glycérol, la paraffine, les cires microcristallines.

Dans la fabrication de la composition de chewing-gum, l'étape de mélange des ingrédients précités est suivie des étapes d'extrusion, laminage, découpe, refroidissement puis conditionnement, réalisées selon toutes les techniques bien connues de l'homme du métier. On pourra se rapporter à la partie expérimentale illustrant la présente demande, mais aussi au document « Chewing gum sans sucre à base de maltitol » précité. Au final, le chewing-gum est présent sous une des formes bien connues de l'homme du métier, telles que tablettes, billes, dragées, cubes ou encore de comprimés.

De préférence l'utilisation de la présente invention réside dans l'utilisation dans une composition pulvérulente de maltitol, contenant de 0,1 % à 20 %, préférentiellement de 0,1 % à 5 %, en poids sec d'un agent anti-mottant par rapport au poids sec de maltitol, l'agent anti-mottant présentant une surface spécifique BET d'au moins 200 m²/g, l'agent anti-mottant étant une silice micronisée d'une surface spécifique BET d'au moins 200 m²/g.

De préférence l'utilisation de la présente invention consiste dans l'utilisation dans une composition de chewing-gum contenant, les pourcentages étant indiqués en poids sec par rapport au poids total du mélange obtenus :
- de 4,5 % à 95 %, de préférence de 5 à 95% et plus préférentiellement de 20 % à 50 %, d'au moins une gomme de base,
- de 1 % à 95 %, préférentiellement de 10 % à 60 %, d'une composition pulvérulente de maltitol,
- de 0,1 % à 10 %, préférentiellement de 0,1 % à 3 %, d'au moins un arôme, et de 0,1 % à 20 %, de préférence de 0,1 % à 5 %, en poids sec d'au moins un agent anti-mottant, cette quantité étant exprimée en poids sec par rapport au poids sec de maltitol,

l'agent anti-mottant étant une silice micronisée et présentant une surface spécifique BET d'au moins 200 m²/g.

Dans cette composition, l'agent anti-mottant est une silice micronisée d'une surface spécifique BET d'au moins 200 m²/g.

L'invention sera mieux comprise à la lecture des exemples suivants, qui ne sauraient limiter en rien la présente invention.

### EXEMPLES

Dans les exemples, la dureté est mesurée sur un texturomètre (INSTRON) muni d'un poinçon cylindrique, dont on règle la vitesse de pénétration à 50 mm / minute. La dureté correspond à la force maximale observée pendant que le poinçon traverse complètement l'échantillon (parallélépipède rectangle : 30 x 17 x 5 mm).

Dans la présente Demande, la surface spécifique BET est mesurée à partir d'un dispositif Beckman-Coulter SA3100.

Dans le cas du maltitol, la méthode consiste initialement à tamiser une quantité suffisante d'échantillon sur des tamis permettant de récupérer environ 3 grammes d'une coupe granulométrique comprise entre 841 et 250 microns. Dans le cas des anti-mottants, cette étape de tamisage n'existe pas.

Dans une cellule de mesure, préalablement séchée et tarée à 0,001 g près, on introduit une prise d'essai suffisante pour remplir le réservoir de la cellule aux ¾. La cellule est alors placée au poste de dégazage. Celui-ci effectué, la cellule est repesée à 0,001 g près et placée au poste de mesure. Le dispositif traite les données et exprime un résultat en m²/g.

### Exemple 1

Cet exemple porte sur la fabrication de différentes compositions de chewing-gum contenant du maltitol sous forme de poudre, éventuellement en mélange avec une silice. Pour chacune d'elles, on a suivi l'évolution de la dureté au cours de son refroidissement lors de la fabrication, après l'étape de mélange à chaud des différents constituants.

Un premier type de composition est constitué de, exprimé en % en poids sec de chacun de ses constituants par rapport à son poids total :

| | |
|---|---|
| - Gomme base Suncom T : | 35,00 % |
| - Composition pulvérulente de maltitol | |
| (SweetPearl® P35 Roquette Frères) : | 61,00 % |
| - Glycérine : | 0,50 % |
| - sirop de maltitol Lycasin® 85/55 : | 2,50 % |
| - Arôme menthe/vanille (liquide) : | 1,00 % |

Le chewing-gum est réalisé selon le protocole suivant :
- Réchauffer la gomme de base au four micro-ondes et l'introduire dans le pétrin.
- Ajouter la moitié de la composition pulvérulente de maltitol et pétrir pendant 3 minutes
- Ajouter le sirop de maltitol Lycasin® 85/55 et pétrir pendant 2 minutes.
- Ajouter la seconde moitié de la composition pulvérulente de maltitol, l'arôme liquide et pétrir 3 minutes.
- Ajouter la glycérine et pétrir pendant 2 minutes.
- Ajouter l'arôme liquide et pétrir 2 minutes.
- Décharger le pétrin, former et laminer à épaisseur de 5 mm

La composition pulvérulente de maltitol, lorsqu'elle contient le composé, l'agent anti mottant de forte surface spécifique BET, a au préalable été réalisée par mélange entre les deux constituants, à température ambiante.

Cette recette permet de réaliser différentes compositions, en fonction du sorbitol utilisé, de la présence ou non d'un composé de haute surface. Le Tixosil® 331 est une silice micronisée commercialisée par le groupe RHODIA, de surface spécifique BET de l'ordre de 250 m²/g. Enfin, les % indiqués dans le tableau correspondent aux % en poids sec de silice utilisée par rapport au poids sec de maltitol.

On vérifie bien, pour un type de maltitol poudre, l'influence positive de l'agent anti-mottant sur la dureté du produit final, au cours du processus de refroidissement de la composition de chewing-gum.

**Tableau 1**

| Essai n° | Tixosil® 331 | Phosphate tricalcique | Stéarate de magnésium | Fécule de pomme de terre | Dureté 45°C (N) | Dureté 35°C (N) | Dureté 20°C (N) |
|---|---|---|---|---|---|---|---|
| 1 | 0 | 0 | 0 | 0 | 1,5 | 2,7 | 9,8 |
| 2 | 0,50% | 0 | 0 | 0 | 1,7 | 2,8 | 10,6 |
| 3 | 0 | 0,50% | 0 | 0 | 1,3 | 2,85 | 10 |
| 4 | 0 | 0 | 5% | 0 | 1,8 | 3,45 | 10,5 |
| 5 | 0 | 0 | 0% | 0,5% | 1,3 | 2,85 | 10 |
| 6 | 2,50% | 0 | 0 | 0 | 2,4 | 3,7 | 13,1 |
| 7 | 5,00% | 0 | 0 | 0 | 3,2 | 5,2 | 16,9 |

### Exemple 2

Dans cet exemple, on a repris les compositions 1 à 7 précédentes, dont on a suivi la dureté au cours du temps, aux instants t=0, 1 et 15 jours, à température ambiante. Les résultats obtenus apparaissent dans le tableau 2 ci-après.

On vérifie bien que le renforcement de la dureté se poursuit au fil du temps, et que ce niveau de dureté est conservé sur une période de stockage à 50 % d'humidité relative et 20°C pouvant atteindre 15 jours pour les compositions testées.

**Tableau 2**

| Essai n° | Tixosil 331 | Phosphate tricalcique | Stéarate de magnésium | Fécule de pomme de terre | Dureté O j (N) | Dureté 1 j (N) | Dureté 15 j (N) |
|---|---|---|---|---|---|---|---|
| 1 | 0 | 0 | 0 | 0 | 9,8 | 11,2 | 10,4 |
| 2 | 0,50% | 0 | 0 | 0 | 10,6 | 14,6 | 11,8 |
| 3 | 0 | 0,50% | 0 | 0 | 10 | 10,8 | 10 |
| 4 | 0 | 0 | 5% | 0% | 10,5 | 11,4 | 12,9 |
| 5 | 0 | 0 | 0% | 0,5% | 10 | 11,1 | 10,1 |
| 6 | 2,50% | 0 | 0 | 0 | 13,1 | 17,9 | 16,9 |
| 7 | 5,00% | 0 | 0 | 0 | 16,9 | 22,8 | 24,6 |

## Revendications

1. Utilisation d'un agent anti-mottant dans une composition de chewing gum contenant du maltitol sous forme de poudre, pour augmenter la dureté de cette composition de chewing gum,
**caractérisée en ce que** l'agent anti-mottant est une silice micronisée d'une surface spécifique BET d'au moins 200 m²/g.

2. Utilisation selon la revendication 1, **caractérisée en ce que** la composition de chewing-gum contient, les pourcentages étant indiqués en poids sec par rapport au poids total de ladite composition de chewing-gum, de :
- de 4,5 % à 95 %, de préférence de 5 % à 95 %, plus préférentiellement 20 % à 50 % d'au moins une gomme de base,
- 1 % à 95 %, préférentiellement 10 % à 60 % d'une composition pulvérulente de maltitol,
- 0,1 % à 10 %, préférentiellement 0,1 % à 3 % d'au moins un arôme, et
0,1 % à 20 %, préférentiellement 0,1 % à 5 %, en poids sec d'au moins un agent anti-mottant par rapport au poids sec de maltitol, ledit agent anti-mottant
étant une silice micronisée d'une surface spécifique BET d'au moins 200 m²/g.

3. Utilisation selon l'une quelconque des revendications 1 à 2, **caractérisée en ce que** le maltitol utilisé présente une surface spécifique BET comprise entre 0,1 m²/g et 10 m²/g.

## Patentansprüche

1. Verwendung eines Trennmittels in einer Kaugummizusammensetzung, welche Maltit in Pulverform enthält, um die Härte dieser Kaugummizusammensetzung zu erhöhen, **dadurch gekennzeichnet, dass** das Trennmittel ein mikronisiertes Siliciumdioxid mit einer spezifischen BET-Oberfläche von wenigstens 200 m²/g ist.

2. Verwendung nach Anspruch 1, **dadurch gekennzeichnet, dass** die Kaugummizusammensetzung folgendes enthält, wobei die Prozentsätze in Trockengewicht in Bezug auf das Gesamtgewicht der Kaugummizusammensetzung angegeben sind:
- 4,5 % bis 95 %, bevorzugt 5 % bis 95 %, stärker bevorzugt 20 % bis 50 % wenigstens einer Gummibasis,
- 1 % bis 95 %, bevorzugt 10 % bis 60 % einer pulverförmigen Maltitzusammensetzung,
- 0,1 % bis 10 %, bevorzugt 0,1 % bis 3 % wenigstens eines Aromastoffes, und
0,1 % bis 20 %, bevorzugt 0,1 % bis 5 %, bezogen auf das Trockengewicht wenigstens eines Trennmittels, bezogen auf das Trockengewicht von Maltit, wobei das Trennmittel
ein mikronisiertes Siliciumdioxid mit einer spezifischen BET-Oberfläche von wenigstens 200 m²/g ist.

3. Verwendung nach einem der Ansprüche 1 bis 2, **dadurch gekennzeichnet, dass** das verwendete Maltit eine spezifische BET-Oberfläche zwischen 0,1 m²/g und 10 m²/g aufweist.

## Claims

1. The use of an anti-caking agent in a chewing gum composition containing maltitol in powder form, to increase the hardness of this chewing gum composition, **characterized in that** the anti-caking agent is a micronized silica with a BET specific surface area of at least 200 m²/g

2. The use as claimed in claim 1, **characterized in that** the chewing gum composition contains, with the percentages being given by dry weight relative to the total weight of said chewing gum composition, from:
- 4.5% to 95%, preferably from 5% to 95%, more preferably 20% to 50% of at least one gum base,
- 1% to 95%, preferably 10% to 60% of a pulverulent maltitol composition,
- 0.1% to 10%, preferably 0.1% to 3% of at least one flavoring, and
- 0.1% to 20%, preferably 0.1% to 5%, by dry weight relative to the dry weight of maltitol of at least one anti-caking agent, said anti-caking agent being a micronized silica with a BET specific surface area of at least 200 m²/g.

3. The use as claimed in claim 1 or 2, **characterized in that** the maltitol used has a BET specific surface of between 0.1 m²/g and 10 m²/g.
